# EUROPÄISCHE PATENTSCHRIFT

(11) **EP 1 281 729 B1**
(45) Veröffentlichungstag und Bekanntmachung des Hinweises auf die Patenterteilung: **14.09.2005**
(21) Anmeldenummer: 02014490.3
(22) Anmeldetag: 29.06.2002
(51) Int. Cl.: C08J 9/14, C08J 9/18, C08L 23/00

(54) **Verfahren zur Herstellung von Polypropylen-Schaumpartikeln mit hoher Schüttdichte**
Process for the preparation of polypropylene foam particles having a high bulk density
Procédé de préparation de particules expansées de polypropylène ayant une haute densité apparente

(30) Priorität: 31.07.2001 DE 10137355
(43) Veröffentlichungstag der Anmeldung: 05.02.2003
(73) Patentinhaber: BASF Aktiengesellschaft, 67056 Ludwigshafen (DE)
(72) Erfinder: Maletzko, Christian, Dr., 67122 Altrip (DE); Keppeler, Uwe, Dr., 67126 Hochdorf-Assenheim (DE); Korb, Hardy, 67098 Bad Dürkheim (DE); Hahn, Klaus, Dr., 67281 Kirchheim (DE); de Grave, Isidor, Dr., 67157 Wachenheim (DE)

(56) Entgegenhaltungen:
- EP-A- 0 831 115
- WO-A-01/29119
- DE-A- 4 429 844

## Beschreibung

Die Erfindung betrifft ein Verfahren zur Herstellung von Polypropylen-Schaumpartikeln mit einer Schüttdichte von mehr als 200 g/l bis 400 g/l, sowie die Verwendung dieser Schaumpartikel zur Herstellung von Polyolefinschaumstoffen mit entsprechend hoher Dichte.

Polylefinpartikelschaumstoffe weisen im allgemeinen Dichten zwischen 20 und 100 g/l auf. Sie werden vor allem als relativ weiche Verpackungsmaterialien und als stoßdämpfende und schockabsorbierende Formteile, z.B. als Stoßfängerkerne im Automobilbau eingesetzt. Die entsprechenden Schaumpartikel werden hergestellt, indem man in einem Druckbehälter feines Polyolefingranulat in wässriger Suspension bei erhöhter Temperatur mit einem flüchtigen Treibmittel imprägniert, den Ansatz entspannt und die entstandenen Schaumpartikel abtrennt. Schaumpartikel mit Schüttdichten oberhalb von 200 g/l kann man aber in der Praxis auf diese Weise nicht reproduzierbar herstellten; es entsteht immer eine breite Palette von Partikeln unterschiedlicher Korngröße und Dichte, außerdem weicht die erhaltene Schüttdichte oft von der angestrebten ab.

Für manche Anwendungszwecke, z.B. für konstruktive Formteile im Automobilbau, wo hohe Druckfestigkeiten und Steifigkeiten gefordert werden, sind jedoch hohe Dichten oberhalb von 200 g/l erwünscht. Der Erfindung lag daher die Aufgabe zugrunde, Polyolefin-Schaumpartikel mit Schüttdichten von mehr als 200 bis zu 400 g/l auf reproduzierbare Weise bereitzustellen. Diese Aufgabe wird durch das erfindungsgemäße Verfahren gelöst.

Das Verfahren geht aus von partikelförmigen, expandierbaren Propylenpolymerisaten mit einer Schüttdichte von mehr als 400 g/l, die 0,5 bis 10 Gew.-% eines organischen Treibmittels mit einem Siedepunkt zwischen -5 und +150°C enthalten. Derartige expandierbare Partikel sind aus der DE-A 199 50 420 bekannt. Sie werden dort hergestellt durch Imprägnieren von Polypropylengranulat mit 2 bis 50 Gew.-% des organischen Treibmittels in wässriger Suspension in einem Druckbehälter bei Temperaturen zwischen 120 und 150°C, Abkühlen des Ansatzes auf Temperaturen unterhalb von 100°C, Entspannen des Ansatzes, Abtrennen und Waschen des imprägnierten Granulates. Dieses Verfahren ist auf die Herstellung von Schaumpartikeln mit relativ niedriger Dichte unterhalb von 200 g/l zugeschnitten. Es muß deshalb für die Erfordernisse der vorliegenden Erfindung etwas modifiziert werden, so muss z.B. die eingesetzte Treibmittelmenge verringert und die Imprägniertemperatur erhöht werden.

Propylenpolymerisate im Sinne der vorliegenden Erfindung sind
a) Homopolypropylen,
b) Randomcopolymere des Propylens mit 0,1 bis 15. vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder mit 0,5 bis 15 Gew.-% Buten-1 oder ein Terpolymer aus Propylen, 0,5 bis 6 Gew.-% Ethylen und 0,5 bis 6 Gew.-% Buten-1, oder
c) Mischung aus den unter a) und b) genannten Polypropylenen (gegebenenfalls nach Zugabe von Phasenvermittlern).

Geeignet sind sowohl mit ziegler- als auch mit Metallocen-Katalysatoren hergestellte Propylenpolymerisate.

Der Kristallitschmelzpunkt (DSC-Maximum) der unter a) bis c) aufgelisteten Polypropylene liegt im allgemeinen zwischen 90 und 170°C. Ihre Schmelzwärme, bestimmt nach der DSC-Methode, liegt vorzugsweise zwischen 20 und 300 J/g, der Schmelzindex MFI (230°C, 2,16 kp für Propylenpolymerisate und 190°C, 2,16 kp für Ethylenpolymerisate) nach DIN 53 735 zwischen 0,1 und 100 g/10 min.

Bevorzugte Polypropylene sind Homo- oder Copolymere des Propylens mit bis zu 15 Gew.-% Ethylen und/oder Buten-1, besonders bevorzugt sind Propylen/Ethylen-Copolymere mit 1 bis 5 Gew.-% Ethylen. Sie besitzen eine Schmelztemperatur von 130 bis 160°C, und eine Dichte (bei Raumtemperatur) von etwa 900 g/l.

Das Propylenpolymerisat kann mit bis zu 50 % seines Gewichts eines andersartigen Thermoplast mit einer Glastemperatur (DSC-Wendepunkt) unterhalb von 180°C abgemischt sein. Geeignete Thermoplasten sind z.B. Polyamide in Mengen von 5 bis 40 Gew.-%, wobei der Mischung übliche Phasenvermittler, z.B. Blockcopolymerisate, wie Exxelor P 1015 (Fa. EXXON), zugesetzt werden können.

Es hat sich gezeigt, daß die Erfindung auch ohne Zumischen eines artfremden Thermoplasten durchführbar ist. Dies ist insofern bevorzugt, als durch einen Fremdthermoplasten die Recyclierbarkeit des Polyolefins bzw. des daraus hergestellten Schaumstoffs leidet. Kautschukartige Ethylen-/Propylen-Copolymerisate, die zur Elastifizierung zugesetzt werden können, sind in diesem Sinne nicht artfremd.

Das Polypropylen kann die üblichen Zusatzstoffe enthalten, wie Antioxidantien, Stabilisatoren, Flammschutzmittel, Wachse, Nucleierungsmittel, Füllstoffe, Pigmente und Farbstoffe.

Zur Herstellung der expandierbaren Polypropylenpartikel geht man aus von Polypropylengranulat, welches vorzugsweise mittlere Durchmesser von 0,2 bis 10, insbesondere von 0,5 bis 5 mm aufweist. Dieses meist zylinderförmige oder runde Minigranulat wird hergestellt durch Extrudieren des Polypropylen, gegebenenfalls zusammen mit dem zuzumischenden Thermoplasten und weiteren Zusatzstoffen, Auspressen aus dem Extruder, gegebenenfalls Abkühlen und Granulieren.

Das Minigranulat sollte vorzugsweise 0,001 bis 10, vorzugsweise 0,1 bis 5 und insbesondere 0,5 bis 3 Gew.-% eines Nucleierungsmittels enthalten. Geeignet sind z.B. Talkum, Paraffine und/oder Wachse sowie Ruß, Graphit und pyrogene Kieselsäuren, ferner natürliche oder synthetische Zeolithe und (ggf. modifizierte) Bentonite. Sie bewirken, daß ein feinzelliger Schaum entsteht, in manchen Fällen ermöglichen sie überhaupt erst das Schäumen.

Dieses Granulat wird in einem Rührreaktor in Wasser dispergiert. Dabei müssen Suspensionshilfsmittel zugesetzt werden, um eine gleichmäßige Verteilung des Minigranulats im Suspensionsmedium zu gewährleisten. Geeignete Suspensionshilfsmittel sind wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-% eingesetzt.

Wesentlich ist die richtige Wahl des Treibmittels. Sein Siedepunkt sollte zwischen -5 und 150°C, insbesondere zwischen 25 und 125°C liegen. Das Treibmittel ist vorzugsweise ein Alkan, ein Alkanol, ein Keton, ein Ether oder ein Ester. Besonders bevorzugt sind Pentane, Hexane und Heptane, insbesondere s-Pentan, ferner 3,3-Dimethyl-2-butanon und 4-methyl-2-pentanon. Auch Treibmittelmischungen können eingesetzt werden.

Das Treibmittel wird in Mengen von vorzugsweise 1 bis 20 Gew.-%, insbesondere 2 bis 15 Gew.-%, bezogen auf das Granulat, eingesetzt. Die Treibmittelzugabe kann dabei vor, während oder nach dem Aufheizen des Reaktorinhalts erfolgen. Es kann auf einmal oder in Teilportionen zugeführt werden.

Beim Imprägnieren sollte die Temperatur in der Nähe der Erweichungstemperatur des Polypropylens liegen. Sie kann bis 25°C über der Schmelztemperatur (Kristallitschmelzpunkt) liegen. Bei Polypropylen sind Imprägniertemperaturen zwischen 146°C und 170°C bevorzugt.

Je nach Menge und Art des Treibmittels sowie nach der Höhe der Temperatur stellt sich im Reaktor ein Druck ein, der im allgemeinen höher als 2 bar ist und 40 bar nicht übersteigt.

Die Imprägnierzeiten liegen im allgemeinen zwischen 0,5 und 10 Stunden. Vor dem Entspannen und der Entnahme aus dem Rührreaktor wird die Suspension auf Temperaturen unterhalb von 100°C, vorzugsweise auf 10 bis 50°C abgekühlt, indem man z.B. Kühlwasser durch den Reaktormantel leitet. Nach dem Entspannen und dem Ablassen aus dem Reaktor werden die treibmittelhaltigen Partikel vom Suspensionsmedium abgetrennt und gewaschen.

Die expandierbaren Partikel, die nach ihrer Herstellung 0,5 bis 10 Gew.-% Treibmittel enthalten, werden nach üblichen Methoden mit Heißluft oder vorzugsweise mit Wasserdampf in Druckvorschäumern verschäumt werden. Beim Verschäumen mit Dampf werden je nach Art des Treibmittels, der Polymermatrix und der gewünschten Schüttdichte Dampfdrucke zwischen 2,0 und 4,0 bar angewandt, die Schäumzeiten variieren zwischen 3 und 30 sec, die Temperatur beim Schäumen sollte oberhalb von 100°C liegen, bei Polypropylen insbesondere zwischen 130 und 160°C. Die gewünschte Schüttdichte wird dadurch eingestellt werden, dass man den Treibmittelgehalt der expanierbaren Partikel vor dem Verschäumen gezielt abreichert und/oder den Dampfdruck bei Verschäumen gezielt einstellt. Das Abreichern kann dadurch geschehen, dass man bei kleineren Ansätzen die expandierbaren Partikel an freier Atmosphäre stehen läßt und gegebenenfalls leicht erwärmt, bzw. im technischen Maßstab dadurch, dass man Luft oder Stickstoff durch einen mit den Partikeln gefüllten Behälter leitet und das dabei freigesetzte Treibmittel absorbiert. Der Dampfdruck beim Verschäumen mit Wasserdampf kann im Bereich von 2,0 bis 4,0 bar gezielt eingestellt werden, wobei ein erniedrigter Dampfdruck eine höhere Dichte ergibt. Der jeweils optimale Treibmittelgehalt und Dampfdruck kann durch Vorversuche einfach ermittelt werden.

Aus den dabei erhaltenen Schaumpartikeln können nach bekannten Methoden Schaumstoff-Formteile hergestellt werden deren Dichte etwa der Schüttdichte der Schaumpartikel entspricht.

Die in den Beispielen genannten Teile und Prozente beziehen sich auf das Gewicht.

### Beispiele

### 1. Einsatzstoffe

- PP1:: Novolen 3200 MC; Polypropylen der Targor GmbH
- Ruß:: Elftex 570 (Fa. Cabot)
- Wachs 1:: Luwax AF31; Polyethylenwachs der BASF AG
- Wachs 2:: Luwax AH3; Polyethylenwachs der BASF AG
- Talkum:: Typ HF 325
- Stab 1:: Ultranox 626 (Fa. GE)
- Stab 2:: Lowinox TBM 6 (Fa. Great Lakes Chem.)

### 2. Herstellung des PP-Granulats:

Granulat 1 (G1)
   100 Teile PP 1 wurden mit einem Teil Talkum und 0,5 Teilen Wachs 1 gemischt und über einen Doppelschneckenextruder zu Granulat mit 1/d= 3,0 und 1,3 mg Gewicht verarbeitet.
Granulat 2 (G2)
   100 Teile PP 1 wurden mit einem Teil Talkum und 0,5 Teilen Wachs 1, 0,05 Teile Stab 1 und 0,05 Teile Stab 2 gemischt und über einen Doppelschneckenextruder zu Granulat verarbeitet.
Granulat 3 (G3)
   100 Teile PP 1 wurden mit 1,5 Teilen Talkum, 0,5 Teilen Wachs 1, 0,05 Teilen Stab 1 und 0,05 Teilen Stab 2 gemischt und über einen Doppelschneckenextruder zu Granulat verarbeitet.
Granulat 4 (G4)
   100 Teile PP1 wurden mit 2 Teilen Ruß, 1 Teil Talkum, 0,5 Teilen Wachs 2, 0,05 Teile Stab 1 und 0,05 Teile Stab 2 gemischt und über einen Doppelschneckenextruder zur Granulat verarbeitet.

### 3. Herstellung des treibmittelhaltigen Granulates

In einem 55 Liter-Rührbehälter mit Kreuzbalkenrührer wurde das jeweilige Granulat und Pentan in den in der Tabelle genannten Mengen zu den übrigen Einsatzstoffen in den unten genannten Verhältnissen zugegeben. Der Ansatz wurde innerhalb von 2,5 Stunden auf die Imprägniertemperatur (s. Tabelle) gebracht und dort 30 min gehalten. Dabei sollte die Imprägniertemperatur umso höher gewählt werden je niedriger die eingesetzte Treibmittelmenge ist. Dann wurde auf Raumtemperatur abgekühlt und das imprägnierte Granulat zur Abtrennung des Calciumcarbonats mit Salpetersäure gesäuert, gewaschen und über ein Sieb vom Wasser abgetrennt. Die Trocknung erfolgte mit Hilfe eines Stromtrockners. Unmittelbar vor dem Trocknen wurde ein handelsübliches Antistatikum aufgetragen, um elektrostatische Aufladung zu vermeiden. Die DSC der imprägnierten Granulate waren durch einen Doppelpeak im Schmelzbereich gekennzeichnet, wobei der Hochtemperaturpeak in der Regel bei Temperaturen über 160°C lag.

Stoffmengen für Imprägnierung (Vergleichsversuch und Versuche 1-4) jeweils bezogen auf 100 Tl. Granulat:
Wasser: 222,2 Tl.
Calciumcarbonat: 4,5 Tl. (Calcilit 1G; Fa. Alfa)
Lutensol AO 3109: 0,009 Tl. (Fa. BASF AG)
Sokalan CP 9 (25%ig): 0,07 Tl. (Fa. BASF AG)

Stoffmengen für Imprägnierung (Versuche 5-6) jeweils bezogen auf 100 Tl. Granulat:
Wasser: 125,0 Tl.
Calciumcarbonat: 4,5 Tl. (Calcilit 1 G; Fa. Alfa)
Lutensol AO 3109: 0,009 Tl (Fa. BASF AG)
Sokalan CP 9 (25%ig): 0,07 Tl. (Fa. BASF AG)

### 4. Verschäumung

Das treibmittelhaltige Granulat wurde nach dem Waschen und Trocknen entweder direkt verschäumt oder sein Treibmittelgehalt wurde vor dem Verschäumen gezielt abgereichert.

Zum Verschäumen wurde ein mit Dampf betriebener Labordruckvorschäumer eingesetzt. Die eingesetzten Dampfdrucke wurden schrittweise erhöht, wobei die Bedampfungszeit jeweils 8 sec. betrug. Nach dem Trocknen der Schaumpartikel wurde die Schüttdichte bestimmt. Die bei den verschiedenen Bedampfungsdrucken erzielten Schüttdichten sind in der Tabelle aufgeführt.

Die Ergebnisse zeigen, dass bei entsprechend angepasster Imprägniertemperatur durch eine entsprechende Wahl des Bedampfungsdruckes und/oder durch gezieltes Abreichern des Treibmittels ein imprägniertes Granulat zu Schaumpartikeln verschiedenster Schüttdichten verarbeitet werden. Dabei sind vor allem auch Schüttdichten im erfindungsgemäßen Bereich von mehr als 200 bis 400 g/l einstellbar.

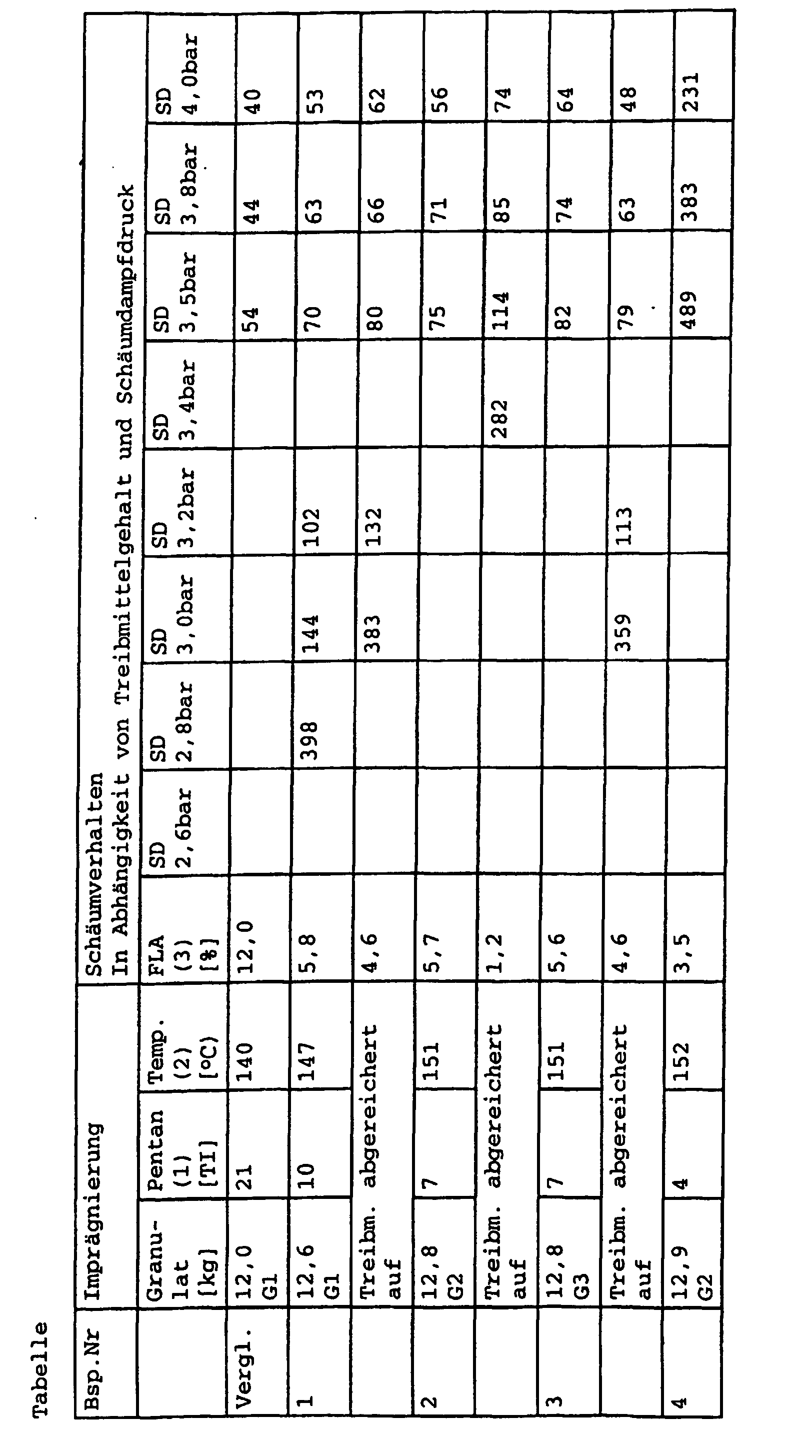

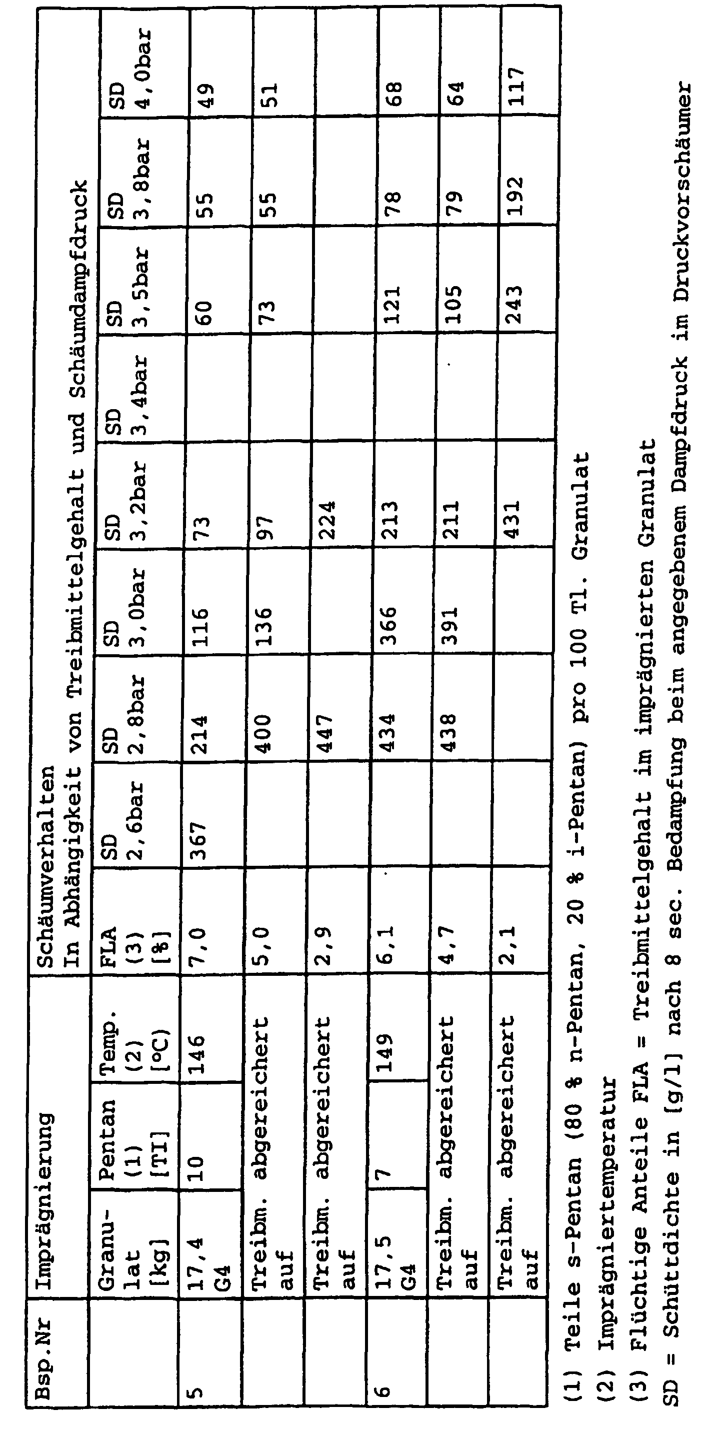

## Patentansprüche

1. Verfahren zur Herstellung von Polypropylen-Schaumpartikeln mit einer Schüttdichte von größer als 200 bis zu 400 g/l durch Verschäumen von partikelförmigen, expandierbaren Homo- oder Copolymerisaten des Propylens mit bis zu 15 Gew.-% Ethylen und/oder Buten-1 mit einer Schüttdichte von mehr als 400 g/l, welche bei einer Temperatur von mindestens 146°C mit einem organischen Treibmittel mit einem Siedepunkt zwischen -5 und 150°C imprägniert wurden und vor dem Verschäumen 0,5 bis 10 Gew.-% des Treibmittels enthalten, **dadurch gekennzeichnet, dass** man die gewünschte Schüttdichte der Schaumpartikel **dadurch** einstellt, dass man den Treibmittelgehalt der expandierbaren Partikel vor dem Verschäumen gezielt abreichert und/oder den Dampfdruck bei Verschäumen im Bereich 2,0 und 4,0 bar gezielt einstellt.

2. Verfahren nach Anspruch 1, **dadurch gekennzeichnet, dass** das Treibmittel ein Pentan oder ein Hexan ist.

3. Verwendung der nach Anspruch 1 hergestellten Schaumpartikel zur Herstellung von Polyolefinschaumstoffen mit einer Dichte von 200 bis 400 g/l.

## Claims

1. A process for producing polypropylene foam particles having a bulk density of from < 200 to 400 g/l by foaming particulate, expandable homo- or copolymers of propylene with up to 15% by weight of ethylene and/or 1-butene, which have been impregnated at a temperature of at least 146°C with an organic blowing agent having a boiling point in the range from -5 to 150°C and comprise from 0.5 to 10% by weight of the blowing agent prior to foaming, wherein the desired bulk density of the foam particles is set by reducing the blowing agent content of the expandable particles in a targeted manner prior to foaming and/or setting the steam pressure during foaming in a targeted manner in the range from 2.0 to 4.0 bar.

2. A process as claimed in claim 1, wherein the blowing agent is a pentane or a hexane.

3. The use of foam particles produced as claimed in claim 1 for producing polyolefin foams having a density of from 200 to 400 g/l.

## Revendications

1. Procédé de préparation de particules de mousse de polypropylène ayant une densité apparente supérieure à 200 et jusqu'à 400 g/litre par expansion d'homopolymères ou copolymères du propylène expansibles en forme de particules et présentant jusqu'à 15% en poids d'éthylène et/ou de butène-1 ayant une densité apparente supérieure à 400 g/litre, particules qui ont été imprégnées à une température d'au moins 146°C par un agent moussant organique ayant un point d'ébullition compris entre -5 et 150°C et qui, avant l'expansion, contiennent 0,5 à 10% en poids de l'agent moussant, **caractérisé en ce qu'**on ajuste la densité apparente souhaitée des particules de mousse par le fait qu'on appauvrit de manière appropriée la teneur en agent moussant des particules expansibles, avant l'expansion, et/ou on ajuste de manière appropriée la tension de vapeur lors de l'expansion dans la gamme comprise entre 2,0 et 4,0 bars.

2. Procédé suivant la revendication 1, **caractérisé en ce que** l'agent moussant est un pentane ou un hexane.

3. Utilisation des particules de mousse préparées suivant la revendication 1, pour la fabrication de mousses de polyoléfine ayant une densité de 200 à 400 g/litre.
